# EUROPEAN PATENT APPLICATION

(11) **EP 4 653 504 A1**
(43) Date of publication of application: **26.11.2025**
(21) Application number: 24305825.2
(22) Date of filing: 24.05.2024
(51) Int. Cl.: C09D 127/16, C09D 11/106

(54) **FILMOGENIC COMPOSITION FOR PREPARING MONOLAYERS WITH IMPROVED ADHESION STRENGTH ON METALLIZED SURFACES**

(71) Applicant: Armor Smart Films, 44100 Nantes (FR)
(72) Inventor: BERTRAND, Mélanie, 44690 CHÂTEAU-THÉBAUD (FR); BERTHOME, Simon, Guillaume, 44860 PONT SAINT MARTIN (FR); ROULLET, Luc, Eric, Bernard, 44118 LA CHEVROLIERE (FR)
(74) Representative: Lavoix

(57) **Abstract**

The invention concerns a composition comprising a fluoropolymer, a silicon-sulfur compound, a vinyl polymer consisting in carbon and hydrogen atoms, and optionally oxygen and/or nitrogen atoms, and a solvent or a mixture of solvents and methods for the preparation thereof and for preparing a coated substrate by applying said composition.

## Description

The present invention concerns a composition comprising a combination of specific ingredients for the preparation of a monolayer exhibiting improved long lasting adhesion strength to a substrate, in particular to metallized substrates.

Fluoropolymers, such as materials comprising polyvinylidene fluoride, are known in particular for their outstanding durability and their dielectric and/or piezoelectric properties. They are used in a wide range of applications, especially in electronic applications. In a large number of applications, they are used in the form of a coated or printed layer, and it is required that this layer exhibits good adhesion properties.

However, fluoropolymers have very weak adhesion strength to metals, which is detrimental for their use in electronic applications, whereby metallic surfaces could be required as a substrate.

To overcome this issue, several solutions have been developed. A way to promote the adhesion of fluoropolymers with metallic substrates is to add a sulfur-containing adhesion promoting agents in combination with the fluoropolymer. For example, EP 3 638 733 and WO 1982/000606A1 disclose a composition comprising, in methyl ethyl ketone, a fluoropolymer comprising units derived from vinylidene fluoride and units derived from trifluoroethylene, and a silane agent. JP 2010/182994 describes an organic piezoelectric material for an ultrasonic transducer suitable for a high frequency and a wide band, comprising a layer obtained from a composition in methyl ethyl ketone of organic piezoelectric material containing a fluoropolymer and a material capable of forming a covalent bond with the electrode metal including a mercapto group as a functional group.

US 2020/0239724 also describes a composition for manufacturing a passivation layer, comprising a fluoro-copolymer and a thiol-based adhesion promoter.

However, these layers of the prior art are not sufficiently adhesive to metallic substrates, in particular after soaking the layer and the substrate assembly in an aqueous solution. This issue is critical for end-uses in severe environments, in particular for its use in applications in contact with water such as outdoor applications or medical devices.

Also, as mentioned above, fluoropolymers are often used under the form of layers applied onto a substrate. There are several techniques to coat a polymer onto a substrate: one route is to melt and process the polymer, another route is to solubilize the polymer into a solvent as to obtain a liquid composition. Liquid composition presents the advantage to be carried out at room temperature conversely to melt-processable compositions, allowing global energy savings. In addition, liquid compositions may be use in a wide range of coating techniques. Printing or patterned coating are therefore possible using a liquid composition. At last, in molten-state processes, such as hot melt slot die coating, the melt-processable composition exhibits a high viscosity and shear rates are often required. The resulting coated film may lack in thickness homogeneity and surface coverage when thin coatings are targeted to reach high dielectric performances.

In the literature, many solvents are prone to be used with fluoropolymers. However, the literature lacks in precision, and solvents to be used are listed among a wide range of chemistries. It is therefore difficult to straightforwardly choose one solvent. In addition, the compositions of prior art are not easy to prepare, in particular because the solvent does not sufficiently solubilize the components. Consequently, the existing solutions do not provide an easy-to-operate way to obtain such compositions, obtainable with standard equipment, with compact industrial plant, through open-air operation, and that is environmentally friendly for the operator.

Thus, there is a need for a composition for producing a layer comprising a fluoropolymer, being a good compromise between the dry thickness of the final layer, the drying time to obtain the dry layer, the preparation time to produce the composition at room temperature, and the possibility to coat the composition in one step using traditional coating /printing techniques.

There is a need for a composition comprising a fluoropolymer, that can be easily prepared with standard equipments, in a compact industrial plant, through open-air operation, and/or that is environmentally friendly for the operator, while obtaining a monolayer exhibiting very high adhesion strength to a substrate, in particular a metallic or metallized substrate.

There is also a need for a composition comprising a fluoropolymer that allows obtaining a monolayer with very high adhesion strength to a substrate, in particular a metallic substrate, especially when the component is used in a device in contact with fluids such as water, while being active. There is in particular a need for a monolayer displaying electroactive property, in particular an electric or electronic or piezoelectric or or pyroelectric dielectric or electrostriction property.

There is also a need for an electro-active or passivation monolayer obtainable from such composition.

Thus, the present invention concerns a composition comprising:
- a fluoropolymer,
- a silicon-sulfur compound,
- a vinyl polymer consisting in carbon and hydrogen atoms, and optionally oxygen and/or nitrogen atoms, and
- a solvent or a mixture of solvents.

Indeed, the inventors found that that the fluoropolymer and the silicon-sulfur compound shall be combined with the vinyl polymer to achieve a very good adhesion strength on metallic substrate of the monolayer, in particular to withstand contact in an aqueous solution, while keeping the active properties of interest of the fluoropolymer.

### Composition

Preferably, the sum of the mass content, in relation to the total mass of the composition, of the fluoropolymer, of the silicon-sulfur compound, and of the vinyl polymer is between 5% and 30%, preferably between 7% and 30%, preferably between 10% and 28%, preferably between 13% and 25%, more preferably between 14% and 20%.

Preferably, the composition comprises from 70% to 95% by mass of solvent, in relation to the total mass of the composition, preferably from 70% and 93% by mass, preferably from 72% and 90% by mass, more preferably between 75% and 87% by mass, even more preferably between 80% and 86% by mass.

In particular, the composition of the invention presents a viscosity between 10 and 20 000 cP, preferably between 100 and 10 000 cP.

The viscosity of the composition is measured at 23°C, by using a standard laboratory method using a cone and plate rheometer.

Preferably, the composition is devoid of any surfactant and/or devoid of any foaming agent.

Indeed, several parameters, like the nature of the solvent or the sum of the mass content of the fluoropolymer, of the silicon-sulfur compound, and of the vinyl polymer could be optimized to reach desired properties of both the composition and of the monolayer. Such parameters influence several factors like viscosity, drying time, film thickness, adhesion strength, compliance with known coating or printing processes, and overall performance. Generally, a high solid content leads to thick coatings or strong adhesive bonds. However, for specific end-uses, the film has to exhibit a thin thickness to reach suitable properties. This it for example an essential condition to produce efficient dielectric films. The thickness of a film depends on the coating process, and also on the solid content, the viscosity and the surface energy. Indeed, solid content of a coating composition drives its propensity to fully cover a surface as a film. The homogeneity of the film applied to a substrate is crucial for quality: the higher the solid content, the higher the coverage may be. However, the higher the solid content, the more expensive the composition is, and the higher the viscosity is.

### Fluoropolymer

The composition of the invention comprises at least one fluoropolymer.

A fluoropolymer is a fluorocarbon-based polymer, i.e. comprising several carbon-fluorine bonds.

The fluoropolymer comprises units derived from fluorinated monomers (fluoromonomers). A fluoromonomer comprises at least one carbon-fluorine bond.

Such fluoromonomers are preferably selected from:
- fluoromonomers of formula (I)

   C(X₁)(X₂)=C(X₃)(X₄) (I),

   in which each X₁, X₂, X₃ and X₄ is independently selected from H, Cl, Br, F, I, and C1-C6 linear or branched alkyl groups, preferably methyl or ethyl group, which are optionally partially or fully halogenated, with the proviso that at least one of the X₁, X₂, X₃ and X₄ comprises at least one fluorine atom;
- perfluoro(alkylvinylethers) of formula Rx-O-CF=CF₂, Rx being a C1-C8, preferably a C1-C4 linear or branched alkyl group, such as perfluoro(methylvinylether) (PMVE), perfluoro(ethylvinylether) (PEVE), and perfluoro(propylvinylether) (PPVE),
- perfluoro(meth)acrylates of formula Ry-O-(O)C-CF=CF₂, Ry being H or a C1-C8, preferably a C1-C4 linear or branched alkyl group,
- fluoro(meth)acrylate of formula Rz-O-(O)C-CH=CH₂, Ry being a C1-C8, preferably a C1-C4 linear or branched alkyl group being at least one, preferably three fluorine atoms,
- perfluorocycloalkene in C3-C6 (Tetrafluorocyclopropene, Hexafluorocyclobutene, Octafluorocyclopentene, Decafluorocyclohexene),
- perfluoro(1,3-dioxole);
- perfluoro(2,2-dimethyl-1,3-dioxole) (PDD),
- fluoromonomers of formula CF₂=C(F)O-CF₂CF(CF₃)-O-CF₂CF₂-X with X being CO₂H, CH₂OH, CO₂CH₃, SO₂F, CH₂OPO₃H or CH₂OCN,
- fluoromonomer of formula CF₂=C(F)-O-CF₂CF₂SO₂F,
- fluoromonomers of formula R-CH₂-O-CF=CF₂ wherein R is H or F(CF₂)ₘ- and m is 1, 2 or 3,
- fluoromonomers of formula R'-O-CF=CH₂ wherein R' is F(CF₂)ₙ- and n is 1, 2, 3, or
- fluoromonomers of formula F(CF₂)_{z}CH₂-O-CF=CF₂ wherein z is 1, 2, 3, 4, or 5.

The fluoropolymer preferably comprises units derived from fluoromonomers of formula (I).

Preferably, in formula (I), each X₁, X₂, X₃ and X₄ is independently selected from H, F, Cl, I, Br, or a methyl group optionally comprising one or more substituents selected from F, CI, I and Br, more preferably is independently selected from H, F, Cl, Br, or a methyl group optionally comprising one or more substituents selected from F, CI, and Br, even more preferably is independently selected from H, F, Cl or a methyl group optionally comprising one or more substituents selected from F and CI, advantageously is independently selected from H, F and a methyl group optionally comprising one or more F, with the proviso that at least one of the X₁, X₂, X₃ and X₄ comprises at least one fluorine atom.

According to an embodiment, each X₁, X₂, X₃ and X₄ is independently selected from H, F, Cl, I and Br, preferably is independently selected from H, F, Cl, and Br, more preferably is independently selected from H, F and CI, even more preferably is independently selected from H and F, with the proviso that at least one of the X₁, X₂, X₃ and X₄ comprises at least one fluorine atom.

According to another embodiment, one and only one of X₁, X₂, X₃ and X₄ is selected from CI, I and Br, preferably CI , and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, with the proviso that at least one of the X₁, X₂, X₃ and X₄ comprises at least one fluorine atom.

Examples of fluoromonomers of formula (I) are: vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

The fluoropolymer can be a homopolymer of a fluoromonomer, or may be obtained by copolymerizing a fluoromonomer with one or more other(s) fluoromonomer(s) and/or other(s) monomer(s) that are not fluoromonomers, to form a copolymer.

By copolymer, it is meant is a polymer derived from more than one species of monomer. Copolymers according to the invention are in particular comonomers of two monomers (dipolymer) or of three different monomers (terpolymer).

Preferably, the total molar content of fluoromonomers in the fluoropolymer is from 40% to 100%, preferably from 50% to 95%, more preferably from 60% to 90%, related to the total molar content of the monomers of the fluoropolymer.

Monomers that are not fluoromonomers and that can be copolymerized with fluoromonomers are preferably selected from non-fluorinated ethylenic monomers.

Ethylenic monomers are molecules comprising at least one carbon-carbon double bond. Preferably, the non-fluorinated ethylenic monomer is of formula C(R₁)(R₂)=C(R₃)(R₄), with R₁, R₂, R₃ and R₄ being independently selected from the group consisting of a hydrogen atom, an aromatic group, preferably phenyl, a C1-C10, preferably C1-C4 linear or branched or cyclic, saturated or unsaturated hydrocarbon group, optionally further comprising ether, ester, nitrile, carboxyl, amine and/or amide group(s), including the possibility that two groups from R₁, R₂, R₃ and R₄ form a 5-, 6- or 7-member ring.

Advantageously, the non-fluorinated ethylenic monomer is selected from ethylene, propylene, methyl or ethyl vinyl ether, vinyl ester, allyl glycidyl ether, (meth)acrylic acid, (m)ethyl (meth)acrylic acid, and vinyl acetate.

Preferably, the molar content (or molar ratio) of first fluoromonomer (in particular when the first fluoromonomer is vinylidene fluoride) in the fluoropolymer is from 40% to 98%, preferably from 50% to 90%, more preferably from 60% to 80%, even more preferably from 60% to 70%. Preferably, the molar content of second fluoromonomer in the fluoropolymer is from 2% to 60%, preferably from 10% to 50%, more preferably from 20% to 40%, even more preferably from 30% to 40%, related to the total molar content of the monomers of the fluoropolymer.

According to an embodiment, the fluoropolymer is a dipolymer of two different fluoromonomers, i.e. of a first fluoromonomer and a second fluoromonomer. The fluoromonomers are each independently as described above.

Preferably, the fluoropolymer is a terpolymer of at least three different fluoromonomers, i.e. of a first fluoromonomer, a second fluoromonomer and a third fluoromonomer. The fluoromonomers are each independently as described above.

The fluoropolymer may comprise first fluoromonomer units and second fluoromonomer units, or may consists of the first fluoromonomer units and of the second fluoromonomer units. The fluoropolymer may also comprise first fluoromonomer units, second fluoromonomer units and third fluoromonomer units, or may consists of the first fluoromonomer units, the second fluoromonomer units and the third fluoromonomer units.

In particular, the fluoropolymer is a copolymer of vinylidene fluoride (as first fluoromonomer) and of at least one second fluoromonomer, the second fluoromonomer being a fluoromonomer as described above, provided that it is different from vinylidene fluoride. More preferably the fluoropolymer is a terpolymer of vinylidene fluoride (as first fluoromonomer) and of a second fluoromonomer and a third fluoromonomer, provided that the second and third fluoromonomers are different from vinylidene fluoride and different from each other.

The fluoropolymer may comprise vinylidene fluoride units and second fluoromonomer units (and third fluoromonomer units, if present), or may consists of vinylidene fluoride units and of second fluoromonomer units (and third fluoromonomer units, if present).

The second fluoromonomer is preferably a fluoromonomer of formula (I), as described above.

If present, the third fluoromonomer is preferably a fluoromonomer of formula (I), as described above.

Preferably, the fluoropolymer is a copolymer, preferably a dipolymer, of vinylidene fluoride and of (at least) a second fluoromonomer of formula (I) in which each X₁, X₂, X₃ and X₄ is independently selected from H, F, Cl, I, Br, or a methyl group optionally comprising one or more substituents selected from F, CI, I and Br, preferably independently selected from H, F, Cl, Br or a methyl group optionally comprising one or more substituents selected from F, CI and Br, with the proviso that at least one of the X₁, X₂, X₃ and X₄ comprises at least one fluorine atom, and provided that the second fluoromonomer is different from vinylidene fluoride.

More preferably, the fluoropolymer is a copolymer, preferably a dipolymer, of vinylidene fluoride and of (at least) a second fluoromonomer of formula (I) in which each X₁, X₂, X₃ and X₄ is independently selected from H, CI, F or a methyl group optionally comprising one or more F or CI, preferably selected from H, F or a methyl group optionally comprising one or more F, with the proviso that at least one of the X₁, X₂, X₃ and X₄ comprises at least one fluorine atom, and provided that the second fluoromonomer is different from vinylidene fluoride.

According to an embodiment, the fluoropolymer is a copolymer, preferably a dipolymer, of vinylidene fluoride and of (at least) a second fluoromonomer of formula (I) in which each X₁, X₂, X₃ and X₄ is independently selected from H, F, Cl, I or Br, preferably selected from H, F, Cl or Br, more preferably selected from H, F and CI, with the proviso that at least one of the X₁, X₂, X₃ and X₄ comprises at least one fluorine atom, and provided that the second fluoromonomer is different from vinylidene fluoride.

According to another embodiment, the fluoropolymer is a copolymer, preferably a dipolymer, of vinylidene fluoride and of (at least) a second fluoromonomer of formula (I) in which one and only one of X₁, X₂, X₃ and X₄ is selected from CI, I and Br, preferably CI and Br, and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, advantageously the other X₁, X₂, X₃ and X₄ are independently selected from H and F, with the proviso that at least one of the X₁, X₂, X₃ and X₄ comprises at least one fluorine atom, and provided that the second fluoromonomer is different from vinylidene fluoride.

Preferably, the fluoropolymer is a copolymer, preferably a dipolymer, of vinylidene fluoride and of (at least) a second fluoromonomer selected from vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

According to a most preferred embodiment, the fluoropolymer is a copolymer, preferably a dipolymer, of vinylidene fluoride and of (at least) a fluoromonomer selected from hexafluoropropylene, chlorofluoroethylene, chlorotrifluoroethylene, tetrafluoroethylene and trifluoroethylene, preferably selected from chlorofluoroethylene, chlorotrifluoroethylene and trifluoroethylene.

According to a preferred embodiment, the fluoropolymer is a terpolymer of vinylidene fluoride, of a second fluoromonomer of formula (I) and of a third fluoromonomer of formula (I), in which each X₁, X₂, X₃ and X₄ is independently selected from H, F, Cl, I, Br, or a methyl group optionally comprising one or more substituents selected from F, CI, I and Br, preferably independently selected from H, F, Cl, Br or a methyl group optionally comprising one or more substituents selected from F, CI and Br, with the proviso that at least one of the X₁, X₂, X₃ and X₄ comprises at least one fluorine atom, and provided that the second and third fluoromonomers are different from vinylidene fluoride and different from each other.

More preferably, the fluoropolymer is a terpolymer of vinylidene fluoride, of a second fluoromonomer of formula (I) and of a third fluoromonomer of formula (I), in which each X₁, X₂, X₃ and X₄ is independently selected from H, CI, F or a methyl group optionally comprising one or more F or CI, preferably selected from H, F or a methyl group optionally comprising one or more F, with the proviso that at least one of the X₁, X₂, X₃ and X₄ comprises at least one fluorine atom, and provided that the second and third fluoromonomers are different from vinylidene fluoride and different from each other.

According to an embodiment, the fluoropolymer is a terpolymer of vinylidene fluoride of a second fluoromonomer of formula (I) and of a third fluoromonomer of formula (I), in which each X₁, X₂, X₃ and X₄ is independently selected from H, F, Cl, I or Br, preferably selected from H, F, Cl or Br, more preferably selected from H, F and CI, with the proviso that at least one of the X₁, X₂, X₃ and X₄ comprises at least one fluorine atom, and provided that the second and third fluoromonomers are different from vinylidene fluoride and different from each other.

According to another embodiment, the fluoropolymer is a terpolymer of vinylidene fluoride of a second fluoromonomer of formula (I) and of a third fluoromonomer of formula (I), in which one and only one of X₁, X₂, X₃ and X₄ is selected from CI, I and Br, preferably CI and Br, and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, advantageously the other X₁, X₂, X₃ and X₄ are independently selected from H and F, with the proviso that at least one of the X₁, X₂, X₃ and X₄ comprises at least one fluorine atom, and provided that the second and third fluoromonomers are different from vinylidene fluoride and different from each other.

Preferably, the fluoropolymer is a terpolymer of vinylidene fluoride, of a second fluoromonomer and of a third fluoromonomer, second and third fluoromonomers being independently selected from vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

According to a most preferred embodiment, the fluoropolymer is a terpolymer of vinylidene fluoride, of a second fluoromonomer and of a third fluoromonomer, second and third fluoromonomers being independently selected from hexafluoropropylene, chlorofluoroethylene, chlorotrifluoroethylene, tetrafluoroethylene and trifluoroethylene, preferably selected from chlorofluoroethylene, chlorotrifluoroethylene and trifluoroethylene.

Preferably, the terpolymer is a polymer of vinylidene fluoride, trifluoroethylene (as second fluoromonomer) and chlorotrifluoroethylene (P(VDF-TrFE-CTFE)) (as third fluoromonomer), or a terpolymer of vinylidene fluoride, trifluoroethylene (as second fluoromonomer) and chlorofluoroethylene (P(VDF-TrFE-CFE)) (as third fluoromonomer).

Preferably, the molar content (or molar ratio) of vinylidene fluoride in the fluoropolymer is from 40% to 98%, preferably from 50% to 80%, more preferably from 60% to 75%, even more preferably from 60% to 70%. Preferably, the molar content of second fluoromonomer in the fluoropolymer is from 15% to 45%, preferably from 20% to 40%, more preferably from 25% to 30%, related to the total molar content of the monomers of the fluoropolymer. Preferably, the molar content of third fluoromonomer in the fluoropolymer is from 1% to 15%, preferably from 3% to 12%, more preferably from 5% to 10%, related to the total molar content of the monomers of the fluoropolymer.

The weight average molar mass Mw of the fluoropolymer is preferably at least 100,000 g.mol⁻¹ , preferably at least 200,000 g.mol⁻¹, more preferably at least 300,000 g.mol⁻¹ even more preferably at least 400,000 g.mol⁻¹, preferably comprises between 200,000 and 1,000,000 g.mol⁻¹. The molecular weight distribution can be determined by size exclusion chromatography (SEC).

The composition of the invention preferably comprises from 3% to 30% by mass of fluoropolymer in relation to the total mass of the composition, preferably from 5% to 25% by mass, preferably from 7% to 20% by mass, preferably from 8% to 18% by mass.

### Silicon-sulfur compound

The composition of the invention comprises at least one silicon-sulfur compound.

A silicon-sulfur compound is a compound comprising at least one silicon atom and at least one sulfur atom, preferably at least one silane group and/or at least one silazane group, and at least one sulfur atom, more preferably at least one silane group and at least one sulfur atom.

A silane group is preferably a group of formula -Si(Ra)(Rb)(Rc), in which Ra, Rb and Rc are each independently selected from H, OH, Alk and -O-Alk, Alk being a C1-C8 linear or branched alkyl group, preferably selected from OH, Alk and -O-Alk.

A silazane group comprises at least a Si-N bond, preferably comprises at least one nitrogen atom covalently bonded to a hydrogen atom and to two silicon atoms (-Si-NH-Si-group).

Preferably, Ra, Rb et Rc are each independently selected from Alk and -O-Alk.

Preferably, Alk (or independently the Alk of the -O-Alk group) is a C1-C4 linear or branched alkyl group, more preferably a methyl or ethyl group, even more preferably is a methyl group.

Preferably, in the silicon-sulfur compound, the sulfur atom of the thiol function is not directly linked to the silicon atom.

More preferably, the sulfur compound of the silicon-sulfur compound is present under the form of a -S-(Rd) group, wherein (Rd) is chosen from the group consisting of H, and an organic moiety comprising from 1 to 30 carbon atoms and at least one nitrogen atom and/or at least one oxygen atom. Preferably, (Rd) is chosen from the group consisting of H, and an organic moiety consisting of from 1 to 30 carbon atoms, hydrogen atoms and one or several nitrogen atoms and/or one or several oxygen atoms.

Preferably, the silicon-sulfur compound is of formula (II):

(Rd)S-Rw-Si(Ra)(Rb)(Rc) (II)

Rw being a linear or branched or cyclic group comprising from 1 to 18 carbon atoms, and optionally comprising one or several oxygen and/or nitrogen atoms, and Ra, Rb, Rc and Rd being as described above according to any embodiment. More preferably, Rw is a C1-C12, preferably a C1-C8, preferably a C1-C6, preferably a C1-C4, more preferably a C2-C4 linear or branched, preferably linear, alkyl or alkylene group, preferably alkyl group.

According to a preferred embodiment, Rd is H. According to this embodiment, the silicon-sulfur compound is a mercaptosilane, i.e. a compound comprising at least one silane group and at least one thiol function (-SH).

Preferably, the silicon-sulfur compound is not a polymer.

Preferably, the silicon-sulfur presents a molecular mass below 800 g.mol⁻¹, preferably below 600 g.mol⁻¹, preferably below 400 g.mol⁻¹, preferably below 250 g.mol⁻¹, preferably between 80 g.mol⁻¹ and 800 g.mol⁻¹.

Non-limiting examples of silicon-sulfur compounds are:
- Octanethioic acid, S-[3-(triethoxysilyl)propyl] ester, reaction products with 2-methyl-1,3-propanediol and 3-(triethoxysilyl)-1-propanethiol (EC number: 485-270-1);
- 3-(triethoxysilyl)propanethiol (CAS number 14814-09-6);
- 3-(dimethoxymethylsilyl)-2-methylpropanethiol (CAS number 14857-92-2);
- 3-(methoxydimethylsilyl)propanethiol (CAS number 14857-97-7);
- Hexamethylene diisocyanate, oligomers, reaction products with 3-aminopropylmethylamine, trimethylacetaldehyde and 3-trimethoxysilylpropane-1-thiol (CAS number 161278-26-8);
- Pentaerythritol, propoxylated, reaction products with 3-isocyanato-3,5,5-trimethylcyclohexyl isocyanate and 3-trimethoxysilylpropane-1-thiol (CAS number 161308-00-5);
- Hexamethylene diisocyanate, trimers, reaction products with (3-aminopropyl)methylamine, benzaldehyde and 3-trimethoxysilylpropane-1-thiol (CAS number 162491-90-9);
- 2-methyl-3-(triethoxysilyl)propanethiol (CAS number 17980-28-8);
- 2-(triethoxysilyl)ethanethiol (CAS number 18236-15-2);
- (trimethylsilyl)methyl thiocyanate (CAS number 18293-51-1);
- Trimethylsilyl isothiocyanate (CAS number 2290-65-5);
- 3-(dimethoxymethylsilyl)propanethiol (CAS number 31001-77-1);
- 1 -allyl-3-[3-(triethoxysilyl)propyl]thiourea (CAS number 42168-36-5);
- 3-trimethoxysilylpropane-1-thiol (CAS number 4420-74-0);
- 4-(triethoxysilyl)butane-2-thiol (CAS number 57640-10-5);
- 2-[3-(trimethoxysilyl)propyl]isothiouronium chloride (CAS number 58505-58-1);
- 3-[tris(2-ethoxyethoxy)silyl]propanethiol (CAS number 67724-41-8);
- 2-(trimethoxysilyl)ethanethiol (CAS number 7538-45-6);
- A mixture of: S-(3-trimethoxysilyl)propyl 19-isocyanato-11-(6-isocyanatohexyl)-10,12-dioxo-2,9,11,13-tetraazanonadecanethioate; S-(3-(trimethoxysilyl)propyl 17-isocyanato-9-(isocyanatohexyl-aminocarbonyl)-10-oxo-2,9,11-triazaheptadecanethioate (CAS number 85702-90-5);
- 1,3-dibutyl-2-[3-(triethoxysilyl)propyl]isothiouronium chloride (CAS number 90210-34-7);
- 1,3-diphenyl-2-[3-(triethoxysilyl)propyl]isothiourea, monohydrochloride (CAS number 90210-35-8);
- 3-[tris(decyloxy)silyl]propanethiol (CAS number 93777-94-7);
- 1-methyl-3-(triethoxysilyl)propyl thiocyanate (CAS number 94087-37-3);
- 2-methyl-3-(triethoxysilyl)propyl thiocyanate (CAS number 94087-38-4);
- 3-[tris(octyloxy)silyl]propanethiol (CAS number 94291-66-4).

Advantageous examples of silicon-sulfur compound include:
- 3-(triethoxysilyl)propanethiol (CAS number 14814-09-6);
- 3-(dimethoxymethylsilyl)-2-methylpropanethiol (CAS number 14857-92-2);
- 3-(methoxydimethylsilyl)propanethiol (CAS number 14857-97-7);
- 2-methyl-3-(triethoxysilyl)propanethiol (CAS number 17980-28-8);
- 2-(triethoxysilyl)ethanethiol (CAS number 18236-15-2);
- 3-(dimethoxymethylsilyl)propanethiol (CAS number 31001-77-1);
- 3-trimethoxysilylpropane-1-thiol (CAS number 4420-74-0);
- 4-(triethoxysilyl)butane-2-thiol (CAS number 57640-10-5);
- 3-[tris(2-ethoxyethoxy)silyl]propanethiol (CAS number 67724-41-8);
- 2-(trimethoxysilyl)ethanethiol (CAS number 7538-45-6);
- 3-[tris(decyloxy)silyl]propanethiol (CAS number 93777-94-7);
- 3-[tris(octyloxy)silyl]propanethiol (CAS number 94291-66-4).

The composition of the invention preferably comprises from 0.05% to 0.3% by mass of silicon-sulfur compound in relation to the total mass of the composition, preferably from 0.08% to 0.25% by mass, preferably from 0.1% to 0.2% by mass, preferably from 0.12% to 0.18% by mass.

The composition of the invention preferably comprises from 0.1% to 5%, preferably from 0.3% to 3%, preferably from 0.5% to 2%, preferably from 0.8% to 1.5% by mass of silicon-sulfur compound in relation to the mass of the fluoropolymer.

### Vinyl polymer

The composition of the invention comprises at least one vinyl polymer consisting in carbon and hydrogen atoms, and optionally oxygen and/or nitrogen atoms.

Vinyl polymers comprises units derived from one or several vinyl monomers.

Vinyl monomer refers to a small organic molecule comprising at least one carbon-carbon double bond.

Preferably, the vinyl monomer has the following formula: C(X)(X')=C(X")(X'"), wherein X, X', X" and X‴ are independently selected from the group consisting of a hydrogen atom, an OH group, a COOH group, a CN group, an aromatic group, preferably a phenyl group, a hydrocarbon group comprising from 1 to 10 carbon atoms, preferably from 2 to 10 carbon atoms, saturated or unsaturated, said aromatic group or hydrocarbon group optionally further comprising an OH group, an ester group, a carboxyl group, an amine group, a nitrile group, and/or an amide group.

Vinyl monomers are preferably chosen from the group consisting of alkenyl monomers in C2-C8, preferably in C2-C4, dienic monomers in C4-C12, acrylate monomers, styrenic monomers, vinylic alcohol, vinyl acetate, acrylamide monomers, maleic acid, and acrylonitrile.

The vinyl polymer may also be an elastomer, such as but not limited to copolymers of acrylonitrile and ethylene, or terpolymer or ethyl monomers, acrylate monomers and other vinyl monomers.

The vinyl polymer may also be a PVA copolymer, a copolymer of vinyl acetate and acrylic acid, or a polyacrylamide.

Preferably, the vinyl polymer is an acrylate polymer.

An acrylate polymer is polymer based on (or obtained from) acrylic acid or acrylic acid derivative, thus it is a polymer comprising units derived from acrylate monomers.

Acrylate monomers are molecules comprising at least an ester function and an unsaturated C=C double bond directly linked to the carbon of the acid or ester function. In other words, acrylate monomers vinyl monomers comprising an ester group, i.e. two double-bonded carbon atoms attached directly to the carbonyl group. Acrylate polymers belong to the family of vinyl polymers.

According to the invention, acryclic acid is included in the definition of acrylate monomer.

Preferably, the acrylate polymer comprises units derived from an acrylate monomer of formula (III) 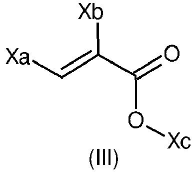 wherein Xa and Xb are independently selected from H, a -CN group, and a C1-C8 linear, branched or cyclic, saturated or unsaturated group comprising from 1 to 8 carbon atoms, and Xc is selected from H, a benzyl group, and a linear or branched or cyclic, saturated or unsaturated, aliphatic or aromatic group comprising from 1 to 24 carbon atoms, optionally substituted by at least one OH group and/or one COOH group, and/or optionally interrupted by at least one -O- atom.

Preferably, Xa and Xb are independently selected from H and a C1-C8 linear or branched alkyl group.

Preferably, Xa = H.

Preferably, Xb = H, a -CN group or a C1-C2 alkyl group, preferably H or a C1-C2 alkyl group more preferably H or a methyl group.

Preferably, Xc is selected from:
- a saturated, a linear or branched alkyl group in C1-C24, preferably in C1-C16, more preferably in C1-C8, even more preferably in C1-C4, advantageously is a methyl or an ethyl; and
- an -A-O-Rx group with A being -CH₂CH(OH)CH₂- or -CH₂CH(CH₂OH)- and Rx being a C10-C22 linear or branched alkyl group.

More preferably, Xc is a saturated, a linear or branched alkyl group in C1-C24, preferably in C1-C16, more preferably in C1-C8, even more preferably in C1-C4, advantageously is a methyl or an ethyl.

The acrylate monomer may be an acrylate with an additional methyl group attached to (Xb) and Xc is a methyl group. The acrylate monomer may also be a methacrylate. One of the most common methacrylate polymers is poly methyl methacrylate (PMMA).

Acrylate monomers are in particular ethyl acrylate, ethyl methacrylate, butyl acrylate, ethylhexyle acrylate or derivatives.

The acrylate polymer can be a homopolymer of an acrylate monomer, preferably of formula (III), or may be obtained by copolymerizing an acrylate monomer with one or more other(s) acrylate monomer(s) and/or other(s) monomer(s) that are not acrylate monomers, to form a copolymer.

For example, the acrylate polymer may be a copolymer of methyl acrylate and methyl methacrylate, ethyl acrylate and methyl acrylate, butyl acrylate and 2-ethylhexyle acrylate.

The acrylate polymer can also be an acrylonitrile styrene (meth)acrylate terpolymer, a styrene-acrylonitrile copolymer with grafted acrylic elastomers, or a copolymer of styrene and acrylate monomer. Monomers that are not acrylate monomers and that can be copolymerized with acrylate monomers are preferably selected from vinyl monomers as described above, with the proviso that such vinyl monomers are not acrylate monomers.

Monomers that are not acrylate monomers and that can be copolymerized with acrylate monomers can be alkenyl monomers in C2-C8, preferably in C2-C4, dienic monomers in C4-C12, styrenic monomers, vinylic alcohol, vinyl acetate, acrylamide monomers, maleic acid, and acrylonitrile.

Acrylic monomers may be ethyl acrylate, butyl acrylate, ethylhexyle acrylate or derivatives.

The vinyl (co)monomer is preferably or formula C(X)(X')=C(X")(X'"), with X, X', X" and X‴ as described above.

Preferably, X = X' = H.

According to an embodiment, X = X' = H, X" is H or a C1-C2 alkyl group, preferably H, and X‴ is -C₆H₅, -CN, -C(O)NH₂, -NC₄H₆O, -C(O)NHC(CH₃)₃, -C(O)N(CH₃)₂, - C(O)NHC(CH₃)₂(CH₂)₄CH₃, and -C(O)NHC(CH₃)₂CH₂S(O)(O)OH.

According to another embodiment, X = X' = H, X" = is H or a C1-C2 alkyl group, preferably H, and X‴ is -O-C(O)-Xm, with Xm being a linear or branched C1-C18 alkyl group.

According to another embodiment, X = X' = H, X" = is H or a C1-C2 alkyl group, preferably H, and X‴ is -O-C(O)-Xm, with Xm being a linear or branched C1-C18 alkyl group.

Preferably, the vinyl polymer is not fluorinated; which means that the vinyl polymer does not comprise any fluorine atom.

According to an embodiment, the vinyl polymer is not sodium poly(meth)acrylate. In particular, the vinyl polymer is not a superabsorbent polymer. In particular, the vinyl monomer is not an alkaline salt of acrylic acid and acrylate monomers.

The composition of the invention preferably comprises from 0.05% to 0.3% by mass of vinyl polymer in relation to the total mass of the composition, preferably from 0.08% to 0.25% by mass, preferably from 0.1% to 0.2% by mass, preferably from 0.12% to 0.18% by mass.

The composition of the invention preferably comprises from 0.1% to 5%, preferably from 0.3% to 3%, preferably from 0.5% to 2%, preferably from 0.8% to 1.5% by mass of vinyl polymer in relation to the mass of the fluoropolymer.

### Solvent

The composition of the invention comprises at least a solvent. The composition may comprise a blend of at least two solvents. The ratio between the solvents may be determined according to their respective miscibility, boiling point and toxicity features. The solvent blend may be adapted according to the targeted thickness of the wet and/or dry monolayer comprising said composition. The solvent blend may also be adapted according to industry standards for an environmentally friendly zone.

In the case of a blend of at least two solvents, each solvent is preferably as described below.

Preferably, the solvent has a boiling point under atmospheric pressure between 95 °C and 180 °C, preferably between 100 °C and 150 °C.

Indeed, to minimize the energy required to dry the composition after being coated on a substrate, it is preferable to use solvents with boiling point not too high. On the other end, a too low boiling point induces safety issues (for example, high flammability).

Preferably, the solvent is an oxyhydrocarbonated solvent, preferably comprising between 3 and 7, more preferably between 4 and 6 carbon atoms, preferably comprising at least one ester or ketone function, advantageously is chosen from the group consisting of cyclopentanone, propyl acetate and propylene glycol methyl ether acetate.

An oxyhydrocarbonated solvent is a solvent consisting of carbon, hydrogen and oxygen atoms.

Such solvents offer a good compromise between their ability to easily solubilize (short time and at room temperature) the fluoropolymer, the silicon-sulfur compound, and the vinyl polymer at a total weight content of between 12% and 30%, while obtaining a composition with a proper viscosity to be coated on the substrate, and a good safety (flammability and toxicity).

The present invention also concerns a method for preparing a composition of the invention, comprising mixing a fluoropolymer, a silicon-sulfur compound, and a vinyl polymer, in a solvent.

The method preferably comprises a first step of preparing a fluoropolymer solution by mixing the fluoropolymer and the solvent, followed by a step of adding the silicon-sulfur compound and the vinyl polymer in the fluoropolymer solution.

Preferably, all the mixing steps are carried out at a temperature between 15°C and 30°C.

The present invention also concerns a method for preparing a coated substrate, comprising a step of applying the composition according to the invention onto a surface or a part of a surface of a substrate, followed by a step of evaporating the solvent.

The substrate may in particular be glass, silicon, quartz, polymeric material, metallic, or a mixed surface composed of several of those materials.

Preferably, the substrate is or comprises a metal, in particular selected from gold, stainless steel, copper and aluminum, chromium and silver.

Preferably, the substrate comprises a metallic surface, in particular a gold, stainless steel, copper and aluminum, chromium or silver surface, more particularly a copper or gold surface. Preferably, the monolayer is applied to and in contact with said metallic surface.

According to an embodiment, the substrate comprises a gold surface, preferably consists in gold.

According to another embodiment, the substrate comprises a copper surface, preferably consists in copper.

The substrate may be of any shape. The substrate may be flat or in relief, smooth or rough, linear or curved, porous or non-porous.

The following examples illustrate the invention but are not limiting it.

### EXAMPLES

### Example 1 - Influence of the presence and of the nature of the compounds

Several compositions have been prepared according to the following protocol at lab scale (each step is at room temperature):
1/ Solvent is weighed in a vial;
2/ Fluoropolymer is weighted in the same vial and the mixture is stirred for 30 min, then left to stand still for 1 hour;
3/ Silicon-sulfur compound and vinyl polymer are weighted and incorporated into the vial. Then, the mixture is stirred for 10 min, then left to stand still until all bubbles have disappeared. The total content of "active ingredients" (fluoropolymer, silicon-sulfur compound and vinyl polymer) is 15 mass%.

Each composition is then applied onto a metallized substrate by screen printing and the solvent is heat-evaporated.

The adhesion of each layer was assessed with a scotch tape by the following protocol:
Type of tape: 3M2525
Adhesion strength on steel: 75N/100 mm
Steps:
   1/ Cut a piece of adhesive about 3 cm long and fold over one end
   2/ Apply the adhesive to the sample by applying a controlled and even pressure to its surface (finger pressure)
   3/ Peel the adhesive at 180° using moderate, constant force (by hand)
   4/ Carry out a visual inspection of the test area on the sample to identify any delamination of the film on the substrate.
Scoring criteria:
   5: no delamination, all the layer is still intact on the substrate
   4: less than 5% (of the surface) of the layer has been delaminated on the applying area of the tape
   3: between 5 and 15% (of the surface) of the layer has been delaminated on the applying area of the tape
   2: between 15 and 35% (of the surface) of the layer has been delaminated on the applying area of the tape
   1: between 35 and 65% (of the surface) of the layer has been delaminated on the applying area of the tape
   0: more than 65% (of the surface) of the layer has been delaminated on the applying area of the tape

The measure of the level adhesion strength of each monolayer after immersion in an aqueous solution was also assessed with the following protocol:
Delay of immersion: 3 days, 7 days, 10 days, 14 days
Steps:
   1/ Preparing a bath of aqueous solution
   2/ Immersing each sample entirely in the aqueous solution, by cautiously avoiding contact or rubbing on the layer (which could damage it)
   3/ Close the container to prevent evaporation of the aqueous solution
   4/ After x days of immersion, take samples
   5/ Carefully dab the remaining aqueous solution off the layer with a lint-free cloth, making sure to preserve the layer, and let drying
   6/ Perform the peel test using the steps and criteria defined above

The details of the composition of each layer and the results of the tests conducted on each layer are gathered in the table 1, wherein the vinyl polymer content and the adhesion promoter content are calculated versus the weight of fluoropolymer:

| | Fluoropolymer | Vinyl polymer | Vinyl polymer content | Adhesion promoter | Adhesion promoter content | Result of adhesion test before immersion tests | Result of adhesion test after immersion during 14 days in aqueous solution |
|---|---|---|---|---|---|---|---|
| 1* | P(VDF-TrFE-CTFE) | - | - | - | - | 0 | 0 |
| 2* | P(VDF-TrFE-CTFE) | - | - | (3-aminopropyl) triethoxysilane | 1% | 0 | 0 |
| 3* | P(VDF-TrFE-CTFE) | Methacrylate copolymer | 2% | - | - | 5 | 0 |
| 4* | P(VDF-TrFE-CTFE) | - | - | MPMDMS | 2% | 5 | 0 |
| 5 | P(VDF-TrFE-CTFE) | Methacrylate copolymer | 1% | MPMDMS | 1% | 5 | 5 |
| 6 | P(VDF-TrFE-CTFE) | PMMA | 1% | MPMDMS | 1% | 5 | 4 |
| 7* | P(VDF-TrFE-CTFE) | - | - | MPTMS | 2% | 5 | 0 |
| 8 | P(VDF-TrFE-CTFE) | Methacrylate copolymer | 1% | MPTMS | 1% | 5 | 4 |
| 9* | P(VDF-TrFE-CTFE) | - | - | Pentaerythritol tetrakis(3-mercaptopropionate) | 2% | 0 | 0 |
| 10* | P(VDF-TrFE-CTFE) | Methacrylate copolymer | 1% | Pentaerythritol tetrakis(3-mercaptopropionate) | 1% | 2 | 0 |

*: comparative

### Table 1: Composition of each layer and the results of the tests

### MPTMS:

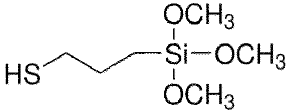

### MPMDMS:

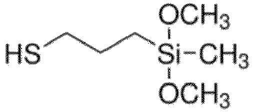

Pentaerythritol tetrakis(3-mercaptopropionate) :

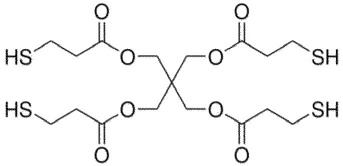

These results show that the presence of both the adhesion promoter and the vinyl polymer are mandatory to obtain a layer of fluoropolymer displaying high adhesion performance even after 14 days of immersion in an aqueous solution.

They also show that thio-compounds that do not comprise any silicon are not efficient to obtain a layer of fluoropolymer displaying high adhesion performance even after 14 days of immersion in an aqueous solution.

### Example 2 - Influence of the nature of the solvent

Several compositions have been prepared according to the following protocol (each step is at room temperature):
1/ Solvent (variable nature, quantity of 125 mL or 250 mL) is weighed in a vial;
2/ Fluoropolymer (P(VDF-TrFE-CTFE))) is weighted in the same vial and the mixture is stirred for 30 min, then left to stand for 1 hour;
3/ Silicon-sulfur compound (MPMDMS) and vinyl polymer (PMMA) are weighted in the vial and the mixture is stirred for 10 min, then left to stand until all bubbles have disappeared.
The total content of "active ingredients" (fluoropolymer, thiosilane coumpound and vinyl polymer) is 10 or 15 mass%. The solid content of the nonsolvent compounds related to the solvent mass is expressed in wt% of MS.

For each composition, the solubility has been assessed visually after blending the composition constituents in a planetary mixer for 1,5 hours.

The viscosity of some of these compositions have also been assess at 23°C, using a standard laboratory method using a cone and plate rheometer with a shear rate of 10 s⁻¹.

The nature of the solvent of each composition and the associated results are gathered in the table 2:

**Table 2: Nature of the solvent of each composition and solubility and viscosity results**

| **Solvent** | **CAS N°** | **Boiling point** | **Solubility of 10w% of MS** | **Solubility of 15w% of MS** | **Viscosity with 10w% of MS (10 s⁻¹) (cP)** | **viscosity with 15w% of MS (10 s⁻¹) (cP)** |
|---|---|---|---|---|---|---|
| Methyl ethyl ketone | 78-93-3 | 80°C | Soluble | Soluble | n.d. | 785 |
| Methylisobutylketone | 108-10-1 | 116°C | Soluble | Soluble | n.d. | 933 |
| Cyclopentanone | 120-92-3 | 130°C | Soluble | Soluble | 484 | 2580 |
| Triethylphosphate | 78-40-0 | 215°C | Soluble | Soluble | n.d | n.d |
| Dimethyl sulfoxide | 67-68-5 | 189°C | Soluble | Hardly soluble unless using a strong stirring | n.d | 5650 |
| Butyl acetate | 123-86-4 | 126°C | Soluble | Soluble | n.d | n.d |
| IsoPropyl Alcohol | 67-63-0 | 82°C | Not soluble | Not soluble | n.d | n.d |
| Propylene glycol monomethyl ether acetate | 108-65-6 | 146°C | Soluble | Soluble | 631 | 4710 |
| Toluene | 108-88-3 | 110°C | Not soluble | Not soluble | n.d | n.d |
| Dipropylene glycol methyl ether | 34590-94-8 | 190°C | Partly soluble | Partly soluble | n.d | n.d |
| Dimethyl carbonate | 616-38-6 | 90°C | Soluble | Soluble | n.d | n.d |
| Cyclohexanone | 108-94-1 | 155°C | Soluble | Soluble | n.d | n.d |
| Ethanol | 64-17-5 | 78°C | Not soluble | Not soluble | n.d | n.d |
| Water | 7732-18-5 | 100°C | Not soluble | Not soluble | n.d | n.d |
| Ethyl acetate | 141-78-6 | 78°C | Soluble | Soluble | n.d | n.d |
| Propyl acetate | 109-60-4 | 102°C | Soluble | Soluble | n.d | 1220 |

## Claims

1. A composition comprising:
- a fluoropolymer,
- a silicon-sulfur compound,
- a vinyl polymer consisting in carbon and hydrogen atoms, and optionally oxygen and/or nitrogen atoms, and
- a solvent or a mixture of solvents.

2. The composition according claim 1, wherein the sum of the mass content, in relation to the total mass of the composition, of the fluoropolymer, of the silicon-sulfur compound, and of the vinyl polymer is between 5% and 30%, preferably between 7% and 30%, preferably between 10% and 28%, preferably between 13% and 25%, more preferably between 14% and 20%.

3. The composition according to claim 1 or 2, wherein the fluoropolymer comprises units derived from fluoromonomers of formula (I) :
C(X₁)(X₂)=C(X₃)(X₄) (I),
in which each X₁, X₂, X₃ and X₄ is independently selected from H, Cl, Br, F, I, and C1-C6 linear or branched alkyl groups, preferably methyl or ethyl group, which are optionally partially or fully halogenated, with the proviso that at least one of the X₁, X₂, X₃ and X₄ comprises at least one fluorine atom.

4. The composition according to any of the preceding claims, wherein the fluoropolymer is a terpolymer of vinylidene fluoride and of a second fluoromonomer and of a third fluoromonomer, provided that the second and third fluoromonomers are different from vinylidene fluoride and different from each other, and wherein the second and the third fluoromonomers are of formula (I):
C(X₁)(X₂)=C(X₃)(X₄) (I),
in which each X₁, X₂, X₃ and X₄ is independently selected from H, Cl, Br, F, I, and C1-C6 linear or branched alkyl groups, preferably methyl or ethyl group, which are optionally partially or fully halogenated,
with the proviso that at least one of the X₁, X₂, X₃ and X₄ comprises at least one fluorine atom.

5. The composition according to any of the preceding claims, comprising from 3% to 30% by mass of fluoropolymer in relation to the total mass of the composition, preferably from 5% to 25% by mass, preferably from 7% to 20% by mass, preferably from 8% to 18% by mass.

6. The composition according to any of the preceding claims, wherein the silicon-sulfur compound is of formula (II):
(Rd)S-Rw-Si(Ra)(Rb)(Rc) (II)
Rw being a linear or branched or cyclic group comprising from 1 to 18 carbon atoms and optionally one or several oxygen and/or nitrogen atoms, Ra, Rb and Rc are each independently selected from H, OH, Alk and -O-Alk, Alk being a C1-C8 linear or branched alkyl group, and Rd is selected from the group consisting of H, and an organic moiety comprising from 1 to 30 carbon atoms and at least one nitrogen atom and/or at least one oxygen atom.

7. The composition according to any of the preceding claims, comprising from 0.05% to 0.3% by mass of silicon-sulfur compound in relation to the total mass of the composition, preferably from 0.08% to 0.25% by mass, preferably from 0.1% to 0.2% by mass, preferably from 0.12% to 0.18% by mass.

8. The composition according to any of the preceding claims, wherein the vinyl polymer comprises units derived from a vinyl of formula C(X)(X')=C(X")(X'"), wherein X, X', X" and X‴ are independently selected from the group consisting of a hydrogen atom, an OH group, a COOH group, a CN group, an aromatic group, preferably a phenyl group, a hydrocarbon group comprising from 1 to 10 carbon atoms, preferably from 2 to 10 carbon atoms, saturated or unsaturated, said aromatic group or hydrocarbon group optionally further comprising an OH group, an ester group, a carboxyl group, an amine group, a nitrile group, and/or an amide group.

9. The composition according to any of the preceding claims, wherein the vinyl polymer is an acrylate polymer comprising units derived from an acrylate monomer of formula (III): 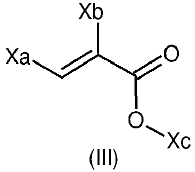 wherein Xa and Xb are independently selected from H, a -CN group, and a C1-C8 linear, branched or cyclic, saturated or unsaturated group comprising from 1 to 8 carbon atoms, and Xc is selected from H, a benzyl group, and a linear or branched or cyclic, saturated or unsaturated, aliphatic or aromatic group comprising from 1 to 24 carbon atoms, optionally substituted by at least one OH group and/or one COOH group, and/or optionally interrupted by at least one -O- atom.

10. The composition according to any of the preceding claims, comprising from 0.05% to 0.3% by mass of vinyl polymer in relation to the total mass of the composition, preferably from 0.08% to 0.25% by mass, preferably from 0.1% to 0.2% by mass, preferably from 0.12% to 0.18% by mass.

11. The composition according to any of the preceding claims, wherein the solvent has a boiling point under atmospheric pressure between 95 °C and 180 °C, preferably between 100 °C and 150 °C.

12. The composition according to any of the preceding claims, wherein the solvent is an oxyhydrocarbonated solvent, preferably comprising between 3 and 7, more preferably between 4 and 6 carbon atoms, preferably comprising at least one ester or ketone function, advantageously is chosen from the group consisting of cyclopentanone, propyl acetate and propylene glycol methyl ether acetate.

13. The composition according to any of the preceding claims, presenting a viscosity between 10 and 20 000 cP, preferably between 100 and 10 000 cP.

14. Method for preparing a composition according to any of claims 1 to 13, comprising mixing a fluoropolymer, a silicon-sulfur compound, and a vinyl polymer, in a solvent, preferably comprising a first step of preparing a fluoropolymer solution by mixing the fluoropolymer and the solvent, followed by a step of adding the silicon-sulfur compound and the vinyl polymer in the fluoropolymer solution.

15. Method for preparing a coated substrate, comprising a step of applying the composition according to any of claims 1 to 13 onto a surface or a part of a surface of a substrate, followed by a step of evaporating the solvent.
